# FASCICULE DE BREVET EUROPEEN

(11) **EP 0 863 833 B1**
(45) Date de publication et mention de la délivrance du brevet: **26.05.1999**
(21) Numéro de dépôt: 96939145.7
(22) Date de dépôt: 19.11.1996
(51) Int. Cl.: B63B 21/66, G01V 1/20

(54) **DISPOSITIF DE MANUTENTION D'UN ORGANE REMORQUE PAR UN BATIMENT NAVAL**
VORRICHTUNG ZUR HANDHABUNG EINES VON EINEM SEESCHIFF GESCHLEPPTEN ELEMENTS
DEVICE FOR HANDLING AN ASSEMBLY TOWED BY A NAVAL VESSEL

(30) Priorité: 28.11.1995 FR 9514079
(43) Date de publication de la demande: 16.09.1998
(73) Titulaire: THOMSON CSF, 75008 Paris (FR)
(72) Inventeur: WARNAN, François Thomson-CSF S.C.P.I., F-94117 Arcueil Cédex (FR); BAUDOUX, Jean-Pierre Thomson-CSF S.C.P.I., F-94117 Arcueil Cédex (FR)
(74) Mandataire: Desperrier, Jean-Louis
(86) Numéro de dépôt international: FR9601825
(87) Numéro de publication internationale: WO9719846

(56) Documents cités:
- FR-A- 1 454 397
- US-A- 4 295 212
- OFFSHORE, INCORPORATING THE OILMAN, vol. 54, no. 5, Mai 1994, TULSA, pages 45-50, XP000465002 D. GEORGE: "Shape of things to come: PGS's revolutionary Ramform seismic ship"

## Description

La présente invention se rapporte aux dispositifs qui permettent de procéder à la manutention , c'est à dire aussi bien à la mise à l'eau qu'au remorquage et à la récupération, des organes, en particulier des antennes acoustiques linéaires, qui sont remorqués à l'arrière d'un bâtiment naval.

Actuellement les antennes acoustiques linéaires remorquées par un bateau de surface le sont essentiellement dans le cadre de la prospection pétrolière. Dans ce cadre on peut se permettre d'effectuer les mesures par un temps suffisamment clément sans effectuer de manoeuvre de navigation importante. Si le temps se gâte et que l'on n'a pas pu remonter l'antenne à bord du bateau, on peut continuer à naviguer à la vitesse et dans la direction les plus sûres en continuant à remorquer l'antenne. Enfin il est aussi possible le cas échéant de remonter l'antenne et de la stocker en vrac sur le pont du bateau.

Il est évidemment pas question d'accepter toutes ces contraintes pour un bateau militaire, qui va devoir opérer par tout temps et ne pas voir ses capacités d'évolution obérées par une antenne de ce type lorsque l'on ne l'utilise pas.

On est alors amené, pour remonter l'antenne à bord et pour la stocker, à utiliser un touret de relevage muni de moyens mécaniques permettant d'enrouler et de dérouler l'antenne et son câble tracteur dans les meilleures conditions quelles que soient les circonstances.

Comme il est hors de question de déconnecter le câble électroporteur en dehors des instants très rares ou il n'y a aucune humidité et aucun brouillard salin, on est amené à utiliser au niveau du touret un connecteur tournant qui permet de maintenir les connexions tout en enroulant et en déroulant le câble et l'antenne. Ce dispositif est d'ailleurs indispensable dans le cas des antennes acoustiques remorquées par des sous-marins, où il est hors de question de déconnecter l'antenne pour pouvoir l'enrouler.

Une solution pourrait être d'utiliser un connecteur magnétooptique pouvant être débranché sans poser de problème de contacts électriques et de corrosion. Il reste néanmoins à assurer la propreté des surfaces optiques devant venir en conjonction, et la complexité et le coût d'un tel dispositif ne seraient pas sensiblement inférieures, bien au contraire, à ceux d'un connecteur tournant.

Ces problèmes sont encore aggravés dans le cas, qui devient fréquent, d'une antenne acoustique linéaire remorquée activé à partir d'un émetteur basse fréquence contenu dans un poisson lui-même remorqué. En effet dans ce cas, pour des raisons de simplicité, on est souvent amené à remorquer l'antenne par l'intermédiaire du poisson.

Dans un tel cas, si l'on peut remonter le poisson sur le pont du bateau en enroulant son câble de remorquage sur le touret d'un treuil, dès que ce poisson se trouve en butée sur le treuil on ne peut plus aller plus loin, sauf à décrocher du poisson le câble de remorquage de l'antenne, ce qui nous ramène au cas précèdent avec toutes les difficultés évoquées plus haut.

Pour pallier ces inconvénients, l'invention propose un dispositif de manutention d'un organe remorqué par un bâtiment naval et relié électriquement à ce bâtiment par un câble, principalement caractérisé en ce qu'il comprend en outre un câble auxiliaire de relevage et un treuil fixé sur le bâtiment pour remonter à bord de ce bâtiment ce câble électrique en enroulant ces deux câbles sur le treuil sans procéder à aucun débranchement électrique.

Selon une autre caractéristique, l'organe remorqué est une antenne linéaire acoustique et le treuil permet en outre d'enrouler cette antenne.

Selon une autre caractéristique, le câble de liaison électrique est raccordé à une extrémité de l'antenne et le câble de relevage est raccordé à l'autre extrémité de l'antenne.

Selon une autre caractéristique, le câble de liaison électrique et le câble de relevage sont raccordés à la même extrémité de l'antenne.

Selon une autre caractéristique, le câble de liaison électrique est raccordé à une extrémité de l'antenne et le câble de relevage est raccordé en un point de ce câble de liaison électrique correspondant au milieu de l'ensemble câble de liaison électrique/antenne.

Selon une autre caractéristique, l'antenne est remorquée par l'intermédiaire d'un poisson lui-même remorqué par le bâtiment naval et le câble de liaison électrique et le câble de relevage sont raccordés à ce poisson; le raccordement du câble de relevage au poisson étant réalisé par des moyens amovibles permettant de l'accrocher au treuil lorsque le poisson est remonté à bord du bâtiment naval.

Selon une autre caractéristique, l'organe remorqué comprend deux antennes linéaires acoustiques destinées à naviguer de conserve sensiblement parallèlement l'une à l'autre, le câble électrique de liaison est relié à l'une des extrémités de l'une des antennes, le câble de relevage est relié à l'une des extrémités de l'autre antenne, et il comprend en outre une boucle de câble de liaison électrique permettant de relier deux extrémités homologues des dites antennes.

Selon une autre caractéristique, la boucle relie les extrémités aval des deux antennes.

Selon une autre caractéristique, la boucle relie les extrémités amont des deux antennes.

Selon une autre caractéristique, le dispositif comprend en outre une boucle supplémentaire reliant les extrémités aval des deux antennes.

Selon une autre caractéristique, le dispositif comprend deux antennes destinées à naviguer de conserve sensiblement parallèlement l'une à l'autre, il comprend deux câbles de liaisons électriques reliés respectivement aux extrémités aval de ces deux antennes, et le câble de relevage est relié à ces deux extrémités amont des deux antennes par une liaison en Y.

Selon une autre caractéristique, le dispositif comprend en outre une boucle de câble venant relier les extrémités aval des deux antennes.

Selon une autre caractéristique, le dispositif comprend un poisson permettant de remorquer les deux antennes par l'intermédiaire du câble de liaison électrique et du câble de relevage.

Selon une autre caractéristique, le dispositif comprend un ensemble d'antennes acoustiques linéaires remorquées destinées à naviguer de conserve parallèlement les unes aux autres selon une série de nappes étagées dans des plans horizontaux superposés, un ensemble de câbles électriques de liaison permettant de relier ces antennes directement ou indirectement au bâtiment naval de remorquage, et un l'ensemble de câbles auxiliaires de relevage permettant de remonter à bord de ce bâtiment ces câbles et ces antennes en les présentant de manière successive au treuil sur lequel elles doivent être enroulés.

D'autres particularités avantages l'invention apparaîtront clairement dans la description suivante faite à titre d'exemple non limitatif en regard des figures annexées, qui représentent :
- La figure 1, le schéma d'un bateau tracteur et d'une antenne acoustique linéaire reliée à ce bateau par un dispositif selon l'invention;
- la figure 2, une variante du dispositif de la figure 1;
- les figures 3,4 et 5, des variantes de ce dispositif dans lesquelles l'antenne est remorquée par l'intermédiaire d'un poisson;
- la figure 6, une extension du dispositif de la figure 1 au cas de deux antennes parallèles; et
- les figures 7,8 et 9, des variantes du dispositif de la figure 6.

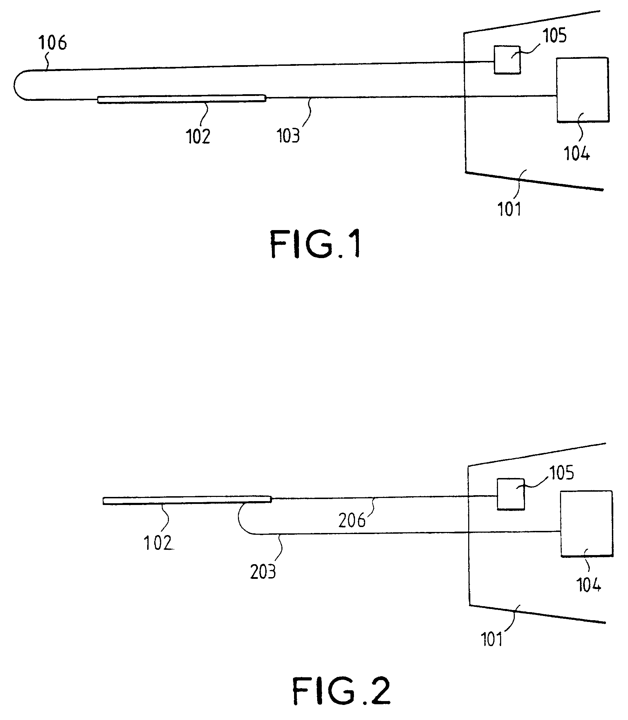

Sur la figure 1, qui correspond à l'exemple le plus simple et le plus explicite de mise en oeuvre du procédé selon l'invention, un bateau 101 remorque une antenne linéaire acoustique 102 par l'intermédiaire d'un câble de remorquage 103.

Selon l'invention, ce câble 103 est purement mécanique et ne comporte aucun fil de liaison électrique, que ce soit pour l'alimentation en énergie électrique ou pour le transfert des signaux depuis l'antenne jusqu'au bateau et vice et versa. De ce fait on peut utiliser pour relever l'antenne et le câble un treuil simple 104, du type "WINCH" par exemple sur lequel on pourra enrouler successivement le câble 103 et l'antenne 102.

Pour assurer les liaisons électriques citée plus haut, on utilise alors un câble purement électrique n'ayant pas d'autre résistance mécanique que celle nécessaire à sa tenue propre sous l'effet des forces hydrodynamiques auquel il est soumis. Ce câble est connecté d'une part aux organes électriques 105 contenu dans le bateau et devant être reliés à l'antenne, et d'autre part à l'antenne elle-même par son extrémité aval opposée à l'extrémité amont par laquelle elle est accrochée au câble mécanique 103.

De cette manière, il est bien clair que lorsque l'on relève l'antenne sur le treuil 104 il n'est pas nécessaire de déconnecter le câble 106, ni des organes 105 ni de l'antenne 102. Pour compléter le relevage de l'ensemble, le treuil 104 sera dimensionné de manière à ce que lorsque l'antenne est entièrement enroulée sur son touret, il reste suffisamment de place pour enrouler le câble de connexion 106 en continuant à laisser tourner le treuil jusqu'à ce que la totalité de ce câble 106 soit enroulé sur le touret.

On a ainsi résolu le problème de relever l'antenne et son câble tracteur sans avoir besoin de décrocher les moyens de connexion électriques et/ou optiques sans avoir à utiliser un connecteur tournant, ce qui réduit le coût et la complexité du système.

Une première variante de réalisation représenté en figure 2, consiste à assurer le remorquage de l'antenne 102 par un câble 206 qui est électrotracteur et donc tout à fait semblable à celui utilisé dans l'art connu. Ceci permet de bénéficier de la lourdeur de ce câble pour permettre d'obtenir, de manière connue dans l'art, l'immersion nécessaire pour l'antenne 102.

Selon l'invention, ce câble 206 est directement relié aux moyens électriques, électroniques, ou optiques 105 situés à bord du bateau 101, sans qu'il soit prévu de moyens de déconnexion particuliers à utiliser pour les opérations de relevage.

Pour assurer le relevage, on utilise alors un câble de relevage 203, purement mécanique et ne comportant aucune liaison électrique, qui est accroché d'un côté sur le treuil 104 et de l'autre à l'extrémité amont de l'antenne 102, là où est également accrochée l'extrémité du câble électrotracteur 206.

Ainsi, en faisant fonctionner le treuil 104, on enroule le câble 203 qui vient tirer simultanément sur l'antenne 102 et sur le câble électrotracteur 206 par leurs extrémités communes. Lorsque le câble de manipulation 203 est entièrement enroulé sur le touret du treuil, ce sont l'antenne 102 et le câble électrotracteur 206 qui s'enroulent simultanément sur ce touret jusqu'à ce que tous les deux soient entièrement relevés à bord du bateau.

Cette variante de réalisation permet donc d'obtenir plus facilement l'immersion de l'antenne, comme vue plus haut, et de diminuer la longueur du câble électroporteur à utiliser, et donc son coût. Elle nécessite toutefois de prendre des précautions particulières au niveau de la jonction entre ce câble électroporteur et l'antenne, puisque bien entendu lorsque l'on va tirer l'ensemble par leur point de jonction commun, l'antenne sera tractée en restant sensiblement droite alors que le câble électroporteur va se replier à ce niveau en remontant vers le bateau en formant une bouche. Cette pliure du câble électroporteur peut comporter des risques de détérioration. Ces risques seront encore accentuées au moment de l'enroulement de l'ensemble de l'antenne et du câble sur le treuil 104. Pour éviter cela, il conviendra de prévoir à ce niveau des moyens de protection du câble électroporteur, comme par exemple une gouttière flexible composée de segments articulés rigides dont le rayon de courbure sera limité par des butées.

A titre de variante, pour simplifier la construction de l'ensemble et raccourcir au maximum la longueur du câble de relevage 203, on peut, dans le cas où le câble électrotracteur 206 est plus long que l'antenne 102, accrocher le câble de relevage en un point du câble électrotracteur situé au centre de l'ensemble câble electrotracteur/antenne. Ainsi, on enroule une grande partie du câble électrotracteur avant d'enrouler l'antenne et il n'est pas nécessaire de continuer les opérations de relevage pour terminer d'enrouler le câble électrotracteur.

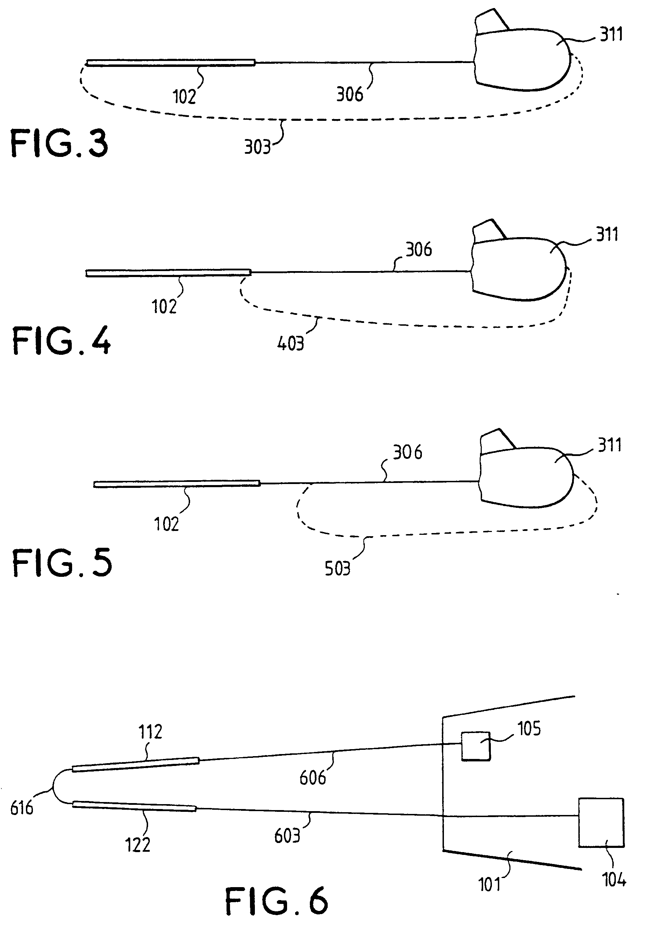

Les avantages retirés par l'invention sont encore plus évidents lorsqu'on l'utilise pour relever une antenne remorquée par l'intermédiaire d'un poisson, comme représenté sur les figures 3 à 5.

Dans ce cas, et de manière commune aux trois figures, l'antenne 102 est remorquée depuis un poisson submergé 311 par l'intermédiaire d'un câble électrotracteur 306. Le poisson est lui même remorqué depuis un bateau, non représenté, par un moyen, lui même non représenté, tel qu'un câble électrotracteur.

Le poisson 311 pourra être de tout type, par exemple purement passif et servant à maintenir l'immersion de l'antenne ou au contraire totalement actif, permettant par exemple d'insonifier l'espace sous-marin pour obtenir des échos destinés à être reçues par l'antenne, de traiter les signaux reçus de l'antenne et d'alimenter celle-ci par une source autonome d'énergie, ce qui permet alors dans ce cas extrême de ne pas utiliser de liaison électrique entre le poisson et le bateau pour faciliter le relevage du poisson en utilisant pour remorquer celui-ci un câble purement mécanique.

En dehors de ce cas extrême, on peut déjà pour remorquer le poisson utiliser le procédé selon l'invention, en utilisant un câble mécanique de relevage fixé au milieu du câble électrotracteur du poisson, ce qui permet là aussi d'éviter les problèmes de connecteur tournant au niveau de la jonction sur le bateau du câble électrotracteur du poisson.

Le poisson étant ainsi remonté sur le bateau, il s'agit maintenant de relever l'antenne, son câble d'alimentation et son câble de traction.

Dans le cas connu jusqu'à présent, où l'antenne est remorquée depuis le poisson par un câble électrotracteur, on se retrouve avec tout les inconvénients décrits plus haut, et même aggravés puisque l'utilisation d'un connecteur tournant au niveau du poisson ne résoudrait strictement rien car n'y a pas de treuil dans le poisson et qu'il semble très difficile dans les cas courants d'en prévoir un. On est donc amené à déconnecter le câble électrotracteur du poisson pour l'accrocher sur un treuil de relevage, ce qui entraîne tout les inconvénients cités plus haut.

Le procédé selon l'invention consiste, comme représenté sur la variante de la figure 3, a accrocher un câble mécanique de relevage 303 d'une part sur le poisson 311 de manière amovible et d'autre part à l'extrémité aval de l'antenne 102 de manière inamovible en opération.

De cette manière, lorsque le poisson est remonté sur le pont du bateau, on décroche le câble de relevage 303 du poisson, on accroche l'extrémité ainsi détachée sur le touret d'un treuil, et on met en route ce treuil.

Le treuil enroule alors le câble 303, puis l'antenne 102, puis le câble électrotracteur 306. A la fin des opérations l'ensemble est donc enroulé sur ce treuil sans qu'il y ait eu besoin de déconnecter le câble électrotracteur et sans avoir eu à utiliser un joint électrique tournant.

On remarque que, contrairement au système de base représenté sur la figure 1, le câble de remorquage de l'antenne sert à assurer les liaisons électriques et que c'est le câble de relevage qui est accroché à l'extrémité aval de l'antenne, cette disposition pourrait être utilisée comme variante du système de base. Comme il faut décrocher le câble de relevage qui n'est pas au départ relié à un treuil , il est préférable que ce câble ne soit pas sous tension mécanique et donc qu'il ne serve pas au remorquage de l'antenne. On bénéfice ainsi du même coup des avantages obtenues par le poids du câble électrotracteur, qui ont été décrits plus haut.

Corrélativement à la variante de la figure 2, on peut également utiliser une variante représentée en figure 4, dans laquelle le câble de relevage mécanique 403 est accroché à l'extrémité amont de l'antenne 102 à l'endroit où sont accrochés le câble électrotracteur 306 et cette antenne. Une autre variante, représentée en figure 5, consiste à accrocher ce câble 503 en un point du câble électrotracteur 306 correspondant à la moitié de la longueur totale de ce câble 306 et de l'antenne 102.

Ces deux variantes présentent les avantages de diviser sensiblement par deux la longueur du câble mécanique à utiliser, et de réduire la traînée correspondante. Il y aura lieu de prendre les précautions nécessaires, par exemple celle exposée plus haut, pour éviter une pliure excessive du câble électrotracteur 306.

Le raccordement entre le câble de relevage et l'antenne dans ces deux dernières variantes, se fera de préférence avec des moyens mécaniques tels qu'une rotule, ce qui permet de faciliter l'articulation aussi bien lors de la navigation de l'ensemble que lors des opérations de relevage et de mise à l'eau.

L'invention propose également, à titre de variante, d'éloigner le point d'accrochage du câble de relevage du poisson par un moyen rigide, tel qu'un bras ou une tige, ou même l'un des ailerons de navigation de ce poisson, afin d'imposer une distance minimale entre ce câble de relevage et l'ensemble câble-tracteur/antenne pendant la navigation du système. De cette manière, on diminue les perturbations éventuelles apportés aux mouvements de l'antenne. Ce moyen rigide sera de préférence placé dans un plan vertical afin de symétriser les réactions de l'ensemble pendant la navigation c'est à dire d'avoir les mêmes réactions aux efforts hydrodynamiques à bâbord et à tribord.

On sait que l'un des problèmes de la réception des signaux acoustiques par une antenne linéaire remorquée réside dans l'ambiguïté de la localisation de ces signaux entre la droite et la gauche de l'antenne de réception. L'une des méthodes connues pour lever cette ambiguïté consiste à utiliser deux antennes linéaires acoustiques qui sont remorquées côte à côte et sensiblement parallèlement l'une à l'autre en étant séparées d'une distance déterminée en fonction des fréquences utilisées. Un traitement électronique des signaux reçus permet de lever l'ambiguïté citée plus haut.

Le procédé selon l'invention s'applique alors d'une manière remarquablement efficace et simple pour mettre à l'eau, remorquer, et relever de telles antennes, selon une configuration représentée sur la figure 6.

Sur cette figure, les deux antennes 112 et 122 naviguent de conserve sensiblement parallèlement entre elles et sont remorquées par le navire 101, la première par un câble électrotracteur 606, et la seconde par un câble de relevage 603. Ces câbles sont respectivement accrochés le premier au moyens de connexion 105 situés sur le bateau et le second aux treuil de relevage 104 situé lui-même sur le bateau. A leur autre extrémité ces câbles sont respectivement accrochés aux extrémités amonts des deux antennes.

Le câble électrotracteur 606 assure de manière classique les liaisons électriques de l'antenne 112. Pour assurer les liaisons électriques de l'antenne 122, on utilise une boucle de câble 616 comportant les connexions nécessaires qui vient raccorder les extrémités aval des deux antennes. Les liaisons de l'antenne 122 aux moyens de connexion 105 s'effectuent alors par l'intermédiaire de l'antenne 112 et du câble électrotracteur 606, selon des modalités diverses à la portée de l'homme de l'art. On peut utiliser par exemple des fils de connexion supplémentaires, ou bien dimensionner de manière suffisante les fils servant à l'alimentation de l'antenne 112 pour qu'ils permettent d'alimenter également l'antenne 122, et multiplexé les signaux provenant de cette antenne 122 avec les signaux provenant de l'antenne 112 sur un ou plusieurs fils de connexion supportant des trames de multiplexage.

La mise à l'eau et le relevage de cet ensemble se fera de la même manière que dans le cas de la figure 1. Ainsi pour le relevage de cet ensemble, on enroulera sur le touret du treuil 104 d'abord le câble de relevage 603, puis l'antenne 122, la boucle 616, l'antenne 112 et enfin le câble électrotracteur 606. Selon les contraintes d'enroulement, le treuil comporte plusieurs tourets adaptés.

Afin d'assurer la symétrie de navigation des deux antennes, on donnera au de câble de relevage 603 des caractéristiques mécaniques identiques à celles du câble électrotracteur 606. Selon les contraintes d'enroulement, le treuil comportera plusieurs tourrets adaptés.

Comme la figure le représente d'une manière exagérée, les antennes 112 et 122 ne sont généralement pas exactement parallèles, mais sont légèrement pincées vers l'arrière. Cet effet peut être plus ou moins accentué en fonction des dimensions de la boucle 616 et de la traînée induite par celle-ci, traînée qui dépend également de ses dimensions. En fait, en particulier pour éviter d'éventuelles vibrations provenant des effets hydrodynamiques sur un tel câble de section circulaire placé en travers de l'écoulement, on aura intérêt à munir cette boucle de dispositifs permettant de régulariser l'écoulement et d'empêcher l'apparition de ces vibrations. Pour cela, on utilisera des méthodes connues, telles que par exemple la fixation de franges ou de poils à la surface du câble formant la boucle. La traînée ainsi induite permet d'obtenir une traction relativement importante sur les extrémités aval des antennes et stabilise ainsi leur position le long de la trajectoire moyenne suivie par ces antennes en permettant de remplacer les moyens habituellement utilisés pour cette fonction, tels que les dragues, les parachutes ou les cylindres de queue. Du même coup on obtient une stabilisation de l'écartement entre les extrémités de l'antenne, en résolvant ainsi un problème difficile à résoudre par des moyens ordinaires tels que ceux cités plus haut. Le pincement ainsi obtenu, ou constaté, peut être facilement compensé au niveau de la formation de voies à partir des signaux reçus par les antennes. Le cas échéant si le pincement est suffisamment faible, on pourra le considérer comme négligeable. Par ailleurs, en comparant les signaux reçus par des hydrophones homologues sur chaque antenne, on peut facilement et de manière connue dans l'art, mesurer l'écartement entre les antennes à ce niveau et en tenir compte dans le traitement destiné à obtenir les voies de réception.

L'utilisation des deux antennes telles que décrites ci-dessus peut se faire également par remorquage à l'aide d'un poisson, ce qui, outre les possibilité d'activer les antennes, permet d'obtenir une navigation plus satisfaisante à une profondeur réglable et constante et avec une faible perturbation des antennes par le sillage du bateau.

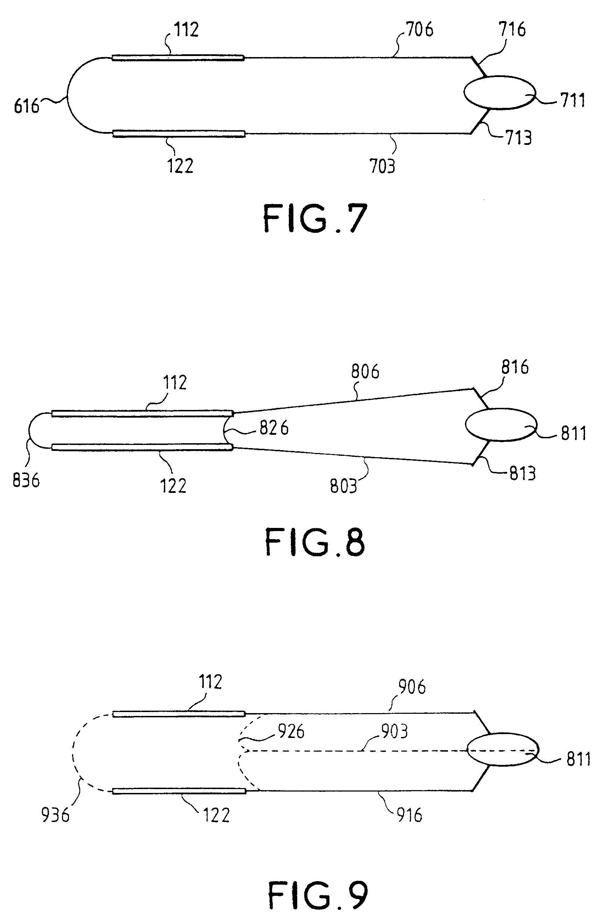

Pour cela, on utilisera un système tel que celui représenté sur la figure 7 dans laquelle un poisson 711, remorqué par des moyens non représentés, remorque lui-même deux antennes 112 et 122 à l'aide d'un câble électrotracteur 706 et d'un câble de relevage 703. Ces antennes sont reliées à leur extrémité aval par une boucle 616. Afin d'obtenir une séparation correcte des antennes, les extrémités amont des câbles 706 et 703 sont reliés respectivement aux extrémités de deux bras 716 et 713 fixés latéralement sur le corps du poisson, de manière à écarter ces extrémités, et par conséquent les antennes elles-mêmes, de la distance nécessaire, qui sera déterminée en fonction de la bande de fréquence de réception souhaitée.

Cet ensemble poisson-câble-antenne est vu dans un plan horizontal et là aussi, et contrairement à la représentation simplifiée de la figure, les antennes sont légèrement pincées vers l'arrière.

Le relevage de cet ensemble s'effectuera d'une manière semblable à celle décrite pour les dispositifs des figures 3 et 6. On commencera par ramener à bord du bateau tracteur le poisson 711, puis on décrochera le câble 703 du bras 713 pour venir l'accrocher sur le treuil de relevage prévu. On actionnera ensuite ce treuil pour relever et enrouler sur le touret du treuil successivement le câble 703, l'antenne 122, la boucle 616, l'antenne 112 et enfin le câble 706.

Pour les opérations de mise à l'eau on procédera bien entendu de manière inverse.

Là aussi on peut utiliser les variantes correspondant aux figures 4 et 5 et représentées par exemple sur la figure 8. Compte tenu de la présence de deux antennes, ces variantes ne sont pas très pratiques à utiliser mais elles peuvent être utiles, en particulier lorsqu'il est nécessaire que les antennes naviguent très près l'une de l'autre ou sans boucle à l'arrière.

Dans ce cas, la boucle de liaison 826 est fixée à l'extrémité amont des antennes 112 et 122 et elle est suffisamment courte pour imposer, compte tenu de la courbure due à la traction, l'écartement nécessaire entre les antennes. Le câble électrotracteur 806 et le câble de relevage 803, qui sont accrochés aux bras 816 et 813, s'écarteront alors en bas depuis les antennes pour rejoindre les extrémités de ces bras.

Le cas échéant on pourra aussi mettre une deuxième boucle 836 reliant les extrémités aval des antennes et permettant d'assurer des liaisons électriques entre ces antennes, la boucle 826 ayant un rôle purement mécanique.

Il serait aussi possible de faire naviguer les antennes pour les rapprocher en raccourcissant la boucle arrière située à l'extrémité aval de manière à obtenir la distance correcte en moyenne sur la longueur des antennes. Celles-ci dans ce cas seraient assez fortement pincées, ce permet, en augmentant la charge hydrodynamique de réduire les mouvements des antennes.

Une autre variante, représentée en figure 9, consiste à utiliser deux câbles électrotracteurs 906 et 916, un pour chaque antenne, et un seul câble de relevage 903 symétrique et raccroché au câble électrotracteur par une boucle 926 en forme de Y. Cette solution qui permet d'utiliser des câbles électrotracteurs identique est plus simple mais elle est moins pratique à mettre en oeuvre.

Dans ce cas on peut également pour fixer l'écartement arrière des antennes en utilisant une boucle supplémentaire 936.

Le procédé selon l'invention peut être généralisé au cas de N antennes pouvant être remorquées parallèlement dans un plan horizontal et étagées selon plusieurs couches empilées verticalement. Toutes les combinaisons possibles des variantes décrites sont alors utilisables en choisissant celle qui permet le plus facilement d'obtenir l'enroulement de l'ensemble sur le touret du treuil de relevage. On peut ainsi s'arranger pour que lors du relevage l'ensemble des antennes, des câbles électrotracteurs et de relevage se présente à la file les uns des autres. Par contre lorsque l'antenne complète est déployée, sa forme est obtenu par des reprises mécaniques amovibles utilisant par exemple des oeillets, des mousquetons et des câbles de liaison mécanique. Ces organes sont alors désassemblés les uns des autres au fur et à mesure que les antennes se présentent sur le pont du bateau pour être enroulées sur le treuil . Au mouillage de l'antenne, on refixe ces organes selon un plan prévu à l'avance et l'antenne se déploie petit à petit dans la mer.

## Revendications

1. Dispositif de manutention d'un organe (102) remorqué par un bâtiment naval (101) et relié électriquement à ce bâtiment par un câble (106), qui comprend en outre un câble auxiliaire de relevage (103) et un treuil (104) fixé sur le bâtiment pour remonter à bord de ce bâtiment ce câble électrique en enroulant ces deux câbles sur le treuil sans procéder à aucun débranchement électrique, caractérisé en ce que l'organe remorqué (102) est une antenne linéaire acoustique et que le treuil permet en outre d'enrouler cette antenne.

2. Dispositif selon la revendication 1, caractérisé en ce que le câble de liaison électrique (106) est raccordé à une extrémité de l'antenne (102) et que le câble de relevage (103) est raccordé à l'autre extrémité de l'antenne.

3. Dispositif selon la revendication 1, caractérisé en ce que le câble de liaison électrique (206) et le câble de relevage (203) sont raccordés à la même extrémité de l'antenne.

4. Dispositif selon la revendication 1, caractérisé en ce que le câble de liaison électrique (206) est raccordé à une extrémité de l'antenne et en ce que le câble de relevage (203) est raccordé en un point de ce câble de liaison électrique correspondant au milieu de l'ensemble câble de liaison électrique/antenne.

5. Dispositif selon l'une quelconque des revendications 1 à 4, caractérisé en ce que l'antenne (102) est remorquée par l'intermédiaire d'un poisson (103) lui-même remorqué par le bâtiment naval (101) et en ce que le câble de liaison électrique 306 et le câble de relevage 303 sont raccordé à ce poisson; le raccordement du câble de relevage au poisson étant réalisé par des moyens amovibles permettant de l'accrocher au treuil (104) lorsque le poisson est remonté à bord du bâtiment naval.

6. Dispositif selon la revendication 1, caractérisé en ce que l'organe remorqué comprend deux antennes linéaires acoustiques (112,122) destinées à naviguer de conserve sensiblement parallèlement l'une à l'autre, en ce que le câble électrique de liaison (606) est relié à l'une des extrémités de l'une des antennes (112), en ce que le câble de relevage (603) est relié à l'une des extrémités de l'autre antenne (122), et en ce qu'il comprend en outre une boucle de câble de liaison électrique (616) permettant de relier deux extrémités homologues des dites antennes.

7. Dispositif selon la revendication 6, caractérisé en ce que la boucle (616) relie les extrémités aval des deux antennes.

8. Dispositif selon la revendication 6, caractérisé en ce que la boucle (826) relie les extrémités amont des deux antennes.

9. Dispositif selon la revendication 8, caractérisé en ce qu'il comprend en outre une boucle supplémentaie (836) reliant les extrémités aval des deux antennes.

10. Dispositif selon la revendication 1, caractérisé en ce qu'il comprend deux antennes (112,122) destinées à naviguer de conserve sensiblement parallèlement l'une à l'autre, en ce qu'il comprend deux câbles de liaisons électriques (906,916) reliés respectivement aux extrémités amont de ces deux antennes, et en ce que le câble de relevage (903) est relié à ces deux extrémités amont des deux antennes par une liaison en Y (926).

11. Dispositif selon la revendication 10, caractérisé en ce qu'il comprend en outre une boucle de câble (936) venant relier les extrémités aval des deux antennes.

12. Dispositif selon l'une quelconque des revendications 6 à 11, caractérisé en ce qu'il comprend un poisson (811) permettant de remorquer les deux antennes (112,122) par l'intermédiaire du câble de liaison électrique (806) et du câble de relevage (803).

13. Dispositif selon l'une quelconque des revendications 5 à 12, caractérisé en ce qu'il comprend un ensemble d'antennes acoustiques linéaires remorquées (112,122) destinées à naviguer de conserve parallèlement les unes aux autres selon une série de nappes étagées dans des plans horizontaux superposés, un ensemble de câbles électriques de liaison permettant de relier ces antennes directement ou indirectement au bâtiment naval de remorquage (101), et un l'ensemble de câbles auxiliaires de relevage permettant de remonter à bord de ce bâtiment ces câbles et ces antennes en les présentant de manière successive au treuil sur lequel elles doivent être enroulés.

## Claims

1. Device for handling a member (102) towed by a naval vessel (101) and linked electrically to this vessel by a cable (106), which furthermore comprises an auxiliary lifting cable (103) and a winch (104) which is fixed to the vessel so that this electrical cable can be hoisted on board this vessel by winding these two cables onto the winch without carrying out any electrical unplugging, characterized in that the towed member (102) is a linear acoustic antenna and that the winch furthermore enables this antenna to be wound up.

2. Device according to Claim 1, characterized in that the electrical linking cable (106) is joined to one end of the antenna (102) and that the lifting cable (103) is joined to the other end of the antenna.

3. Device according to Claim 1, characterized in that the electrical linking cable (206) and the lifting cable (203) are joined to the same end of the antenna.

4. Device according to Claim 1, characterized in that the electrical linking cable (206) is joined to one end of the antenna and in that the lifting cable (203) is joined at a point of this electrical linking cable corresponding to the middle of the electrical linking cable/antenna assembly.

5. Device according to any one of Claims 1 to 4, characterized in that the antenna (102) is towed by way of a fish (103) itself towed by the naval vessel (101) and in that the electrical linking cable 306 and the lifting cable 303 are joined to this fish; the joining of the lifting cable to the fish being effected by removable means which enable it to be fastened to the winch (104) when the fish is hoisted on board the naval vessel.

6. Device according to Claim 1, characterized in that the towed member comprises two linear acoustic antennas (112, 122) which are intended to sail in convoy substantially parallel to one another, and in that the electrical linking cable (606) is linked to one of the ends of one of the antennas (112), and in that the lifting cable (603) is linked to one of the ends of the other antenna (122), and in that it furthermore comprises an electrical linking cable loop (616) making it possible to link two counterpart ends of the said antennas.

7. Device according to Claim 6, characterized in that the loop (616) links the downstream ends of the two antennas.

8. Device according to Claim 6, characterized in that the loop (826) links the upstream ends of the two antennas.

9. Device according to Claim 8, characterized in that it furthermore comprises an additional loop (836) linking the downstream ends of the two antennas.

10. Device according to Claim 1, characterized in that it comprises two antennas (112, 122) intended to sail in convoy substantially parallel to one another, and in that it comprises two electrical linking cables (906, 916) respectively linked to the upstream ends of these two antennas, and in that the lifting cable (903) is linked to these two upstream ends of the two antennas by a Y link (926).

11. Device according to Claim 10, characterized in that it furthermore comprises a cable loop (936) which will link the downstream ends of the two antennas.

12. Device according to any one of Claims 6 to 11, characterized in that it comprises a fish (811) making it possible to tow the two antennas (112, 122) by way of the electrical linking cable (806) and of the lifting cable (803).

13. Device according to any one of Claims 5 to 12, characterized in that it comprises an assembly of towed linear acoustic antennas (112, 122) intended to sail in convoy parallel to one another according to a series of staggered tiers in overlaid horizontal planes, an assembly of electrical linking cables making it possible to link these antennas directly or indirectly to the naval towing vessel (101), and an assembly of auxiliary lifting cables enabling these cables and these antennas to be hoisted on board this vessel by presenting them in a successive manner to the winch onto which they are to be wound.

## Patentansprüche

1. Vorrichtung zur Handhabung eines von einem Seeschiff (101) geschleppten und elektrisch mit diesem Schiff über ein Kabel (106) verbundenen Organs (102), die zudem ein Hilfs-Hebekabel (103) und eine auf dem Schiff befestigte Winde (104) enthält, um dieses elektrische Kabel an Bord dieses Schiffs hochzuziehen, indem diese beiden Kabel auf die Winde aufgewickelt werden, ohne eine elektrische Abkoppelung vorzunehmen, dadurch gekennzeichnet, daß das geschleppte Organ (102) eine lineare akustische Antenne ist und daß die Winde zudem das Aufwickeln dieser Antenne ermöglicht.

2. Vorrichtung nach Anspruch 1, dadurch gekennzeichnet, daß das elektrische Verbindungskabel (106) an einem Ende der Antenne (102) und das Hebekabel (103) am anderen Ende der Antenne angeschlossen ist.

3. Vorrichtung nach Anspruch 1, dadurch gekennzeichnet, daß das elektrische Verbindungskabel (206) und das Hebekabel (203) an demselben Ende der Antenne angeschlossen sind.

4. Vorrichtung nach Anspruch 1, dadurch gekennzeichnet, daß das elektrische Verbindungskabel (206) an einem Ende der Antenne und das Hebekabel (203) an einem Punkt dieses elektrischen Verbindungskabels angeschlossen ist, der der Mitte der Baugruppe aus elektrischem Verbindungskabel und Antenne entspricht.

5. Vorrichtung nach einem der Ansprüche 1 bis 4, dadurch gekennzeichnet, daß die Antenne (102) durch einen Fisch (103) geschleppt ist, der selbst vom Seeschiff (101) geschleppt ist, und daß das elektrische Verbindungskabel (306) und das Hebekabel (303) an diesen Fisch angeschlossen sind, wobei der Anschluß des Hebekabels an dem Fisch durch lösbare Mittel gebildet ist, die es ermöglichen, es an der Winde (104) anzukuppeln, wenn der Fisch an Bord des Seeschiffs hochgezogen ist.

6. Vorrichtung nach Anspruch 1, dadurch gekennzeichnet, daß das geschleppte Organ zwei lineare akustische Antennen (112, 122) enthalt, die dazu bestimmt sind, zusammen im wesentlichen zueinander parallel gefahren zu werden, daß das elektrische Verbindungskabel (606) mit einem der Enden einer der Antennen (112) und das Hebekabel mit einem der Enden der anderen Antenne (122) verbunden ist und daß sie zudem eine Schleife (616) eines elektrischen Verbindungskabels enthält, mit welcher zwei sich entsprechenden Enden der Antennen verbindbar sind.

7. Vorrichtung nach Anspruch 6, dadurch gekennzeichnet, daß die Schleife (616) die hinteren Enden der beiden Antennen verbindet.

8. Vorrichtung nach Anspruch 6, dadurch gekennzeichnet, daß die Schleife (826) die vorderen Enden der beiden Antennen verbindet.

9. Vorrichtung nach Anspruch 8, dadurch gekennzeichnet, daß sie zudem eine zusätzliche Schleife (836) enthalt, die die hinteren Enden der beiden Antennen verbindet.

10. Vorrichtung nach Anspruch 1, dadurch gekennzeichnet, daß sie zwei Antennen (112, 122) enthält, die dazu bestimmt sind, zusammen im wesentlichen zueinander parallel gefahren zu werden, daß sie zwei elektrische Verbindungskabel (906, 916) enthält, die jeweils mit den vorderen Enden dieser beiden Antennen verbunden sind, und daß das Hebekabel (903) durch eine Y-förmige Verbindung (926) mit diesen beiden vorderen Enden derbeiden Antennen verbunden ist.

11. Vorrichtung nach Anspruch 10, dadurch gekennzeichnet, daß sie zudem eine Kabelschleife (936) enthält, die die hinteren Enden der beiden Antennen verbindet.

12. Vorrichtung nach einem der Ansprüche 6 bis 11, dadurch gekennzeichnet, daß sie einen Fisch (811) enthält, der das Schleppen der beiden Antennen (112, 122) durch das elektrische Verbindungskabel (806) und das Hebekabel (803) ermöglicht.

13. Vorrichtung nach einem der Ansprüche 5 bis 12, dadurch gekennzeichnet, daß sie eine Baugruppe aus geschleppten linearen akustischen Antennen (112, 122) enthält, die dazu bestimmt sind, zusammen im wesentlichen zueinander parallel gefahren zu werden gemäß einer Reihe von in übereinanderliegenden horizontalen Ebenen gestuften Schichten, wobei es eine Baugruppe von elektrischen Verbindungskabeln ermöglicht, diese Antennen unmittelbar oder mittelbar mit dem Schleppschiff (101) zu verbinden, und wobei es eine Baugruppe aus Hilfs-Hebekabeln ermöglicht, diese Kabel und diese Antenne an Bord hochzuziehen, wobei sie der Winde nacheinander zugeführt werden, auf welcher sie aufgewickelt werden sollen.
